Europäisches Patentamt

European Patent Office

Office européen des brevets

(11) Publication number: 0 356 028
A1

# EUROPEAN PATENT APPLICATION

(21) Application number: 89307755.2

(22) Date of filing: 31.07.89

(51) Int. Cl.⁴: A01M 29/00 , A01M 1/20

(30) Priority: 17.08.88 GB 8819541

(43) Date of publication of application:
28.02.90 Bulletin 90/09

(84) Designated Contracting States:
AT BE CH DE ES FR GB GR IT LI LU NL SE

(71) Applicant: Rumble, Clive St. John
45 Hans Place
London SW1(GB)

Applicant: Halliday, Honey Zilla
'Avon' Satwell Close Rotherfield Greys
near Henley on Thames Oxon(GB)

(72) Inventor: Rumble, Clive St. John
45 Hans Place
London SW1(GB)
Inventor: Halliday, Honey Zilla
'Avon' Satwell Close Rotherfield Greys
near Henley on Thames Oxon(GB)

(74) Representative: Daley, Michael John et al
F.J. CLEVELAND & COMPANY 40/43
Chancery Lane
London, WC2A 1JQ(GB)

(54) Insect repellent device.

(57) A wearable insect repellent device is generally in
the form of a medical adhesive plaster. The front of
the plaster carries a pad (3) impregnated with insect
repellent and this pad (3) is masked with removable
cover strips (4). When the strips (4) are removed,
but not until, the insect repellent is slowly released
by evaporation providing long-term protection for the
wearer.

FIG.1

# INSECT REPELLENT DEVICE

The present invention relates to a wearable insect repellent device.

In accordance with the present invention such a device comprises an absorbent pad impregnatable with a volatile insect repellent liquid, a wearable backing for the pad such backing providing a barrier against rearward transmission of the insect repellent to the wearer and substantially impermeable cover means for the impregnated pad to restrain evaporation of the volatile liquid, the cover means being disturbable to lallow the repellent to evaporate.

In use the device does not effectively repel insects when the cover means is in position. With the cover removed or otherwise disturbed the volatile insect repellent liquid is slowly released by evaporation into the atmosphere providing long-term protection against insect attack for the wearer.

The cover means is preferably constituted by on or more adhesively secured but removable strips on the rear surface of the backing member.

The word 'pad' is used in the broad functional sense to denote any piece or strip of material, usually fabric, capable of absorbing, ultimately to impregnation, a volatile liquid.

A useful embodiment of the invention has the backing in the form of an adhesive patch or plaster. The adhesive rear surface of the patch is masked by removable strips in an arrangement similar to that used for medical sticking plasters. The front surface of the impermeable patch of thermoplastic or similar carries by adhesion or otherwise a pad impregnated with insect repellent. Over said pad and secured adhesively to the patch around the pad are removable cover strips to be peeled off when required for use. In a development of the invention another fixed strip which allows the passage of insect repellent vapour is interposed between the pad and the cover strip. This intermediate strip may provide a decorative facing when the cover is removed. The intermediate strip may, for example, be impervious but perforated to allow vapour transmission.

The invention will now be described by way of example and with reference to the accompanying drawings wherein:-

Figure 1 is a wearable insect repellent device in accordance with the first embodiment of the invention;

Figure 2 is a section on the line 2-2 of Figure 1; and

Figures 3 and 4 are perspective views showing alternative embodiments of the invention.

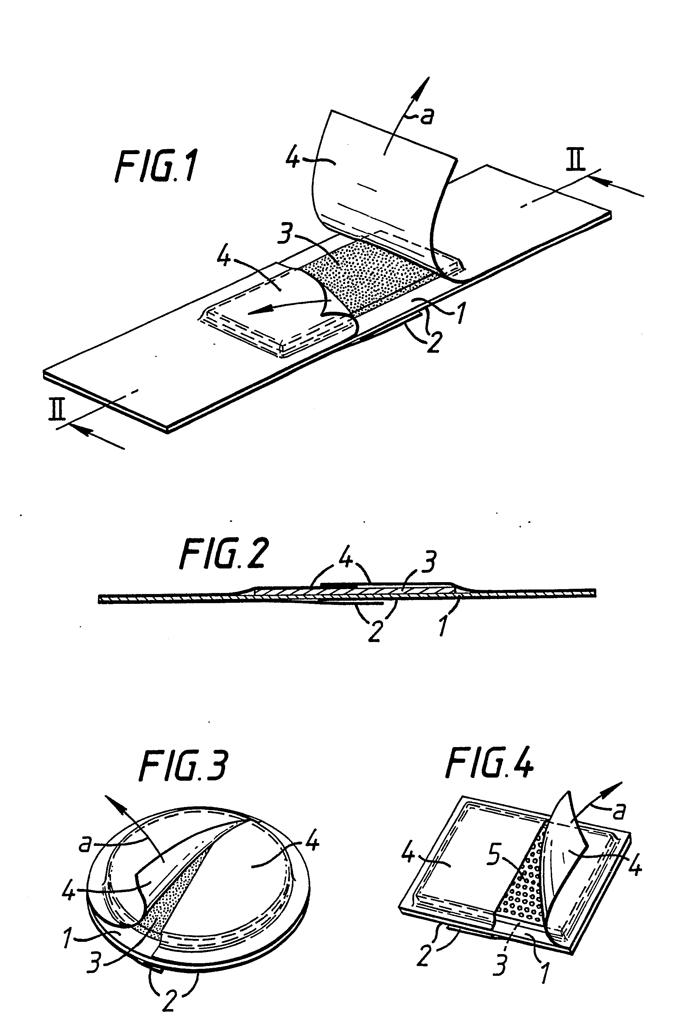

Referring first to Figures 1 and 2 of the drawings the insect repellent device is in the form of a flexible adhesive patch or plaster. Thus an impermeable carrier strip 1 has an adhesive rear surface with an adhered pair of masking strips 2, the one overlapping the other for ease of removal. Thus far the device is similar to a medical sticking plaster minus the dressing pad. To the front surface of the carrier strip 1 is adhesively secured an absorbent pad 3, and this pad is impregnated with a volatile insect repellent liquid such as that vegetable extract sold under the acronym DEET (N-N-diethyl-meta-toluamide). The front surface of the strip 1 is adhesive to secure the pad 3 and front masking strips 4, similar configurated to rear masking strips 2.

In use rear masking strips 2 are removed and the patch secured to an appropriate location on a wearer possibly a wrist or an ankle or indeed, if desired, to an inaminate object. When the wearer enters an environment in which biting or stinging insects are present the front strips 4 are peeled away in the manner illustrated by the arrows (a) and the device remains effective until the liquid has evaporated from the pad 3.

It is envisaged if a fresh device is neither available nor desired, for replenishment by re-impregnation of the pad 3 with insect repellent from a suitable dispenser.

Figure 3 shows an alternative but smaller device of circular disc-like form. The parts are designated as in Figures 1 and 2 and the mode of operation is identical.

With regard to Figure 4 the device is as before except between the pad 3 and the removable front cover 4 is interposed an intermediate perforated strip 5 of impermeable material which allows transmission of insect repellent vapour but retains and protects the pad wetted with the repellent.

An adhesive patch in accordance with the invention may be shaped and coloured to be visually attractive and not resemble too closely a medical plaster. Such a patch can be placed on areas prone to insect attack such as the ankles, wrist or neck. The patches may be elongate so as to take up a band-like configuration or of any other suitable configuration. Attractive shapes, such as hearts or flowers are envisaged and bright colours may be used. The intermediate strip or piece may be a contrasting colour. It is envisaged that patches in accordance with the invention could be stuck onto the skin or to clothes.

In an alternative embodiment of the invention the backing instead of flexible strip 1 can be a solid piece (non-adhesive at the rear) which could constitute a bracelet, bangle, armlet or other discrete decorative item. The front of the backing piece will carry the pad and adhesively secured masking cover as set out above.

The insect repellent will usually be a volatile liquid which can readily be taken up by an absorbent pad. Such volatile liquids are known. The invention further envisages replacing the insect repellent by another active volatile liquid for example a perfume or insecticide.

With regard to materials the devices may be made using the technology current in the manufacture of adhesive plasters and patches, for example in the medical field. Strip 1 must resist the rearward transmission of insect repellent liquid onto the skin so a strip of flexible thermoplastic material could be used. The adhesives on the rear surface of 1 and elsewhere may be those used for medical patches and the peel-off flexible strips 2 are conventional. Similar considerations apply to the front of strip 1 though strips 4 could be replaced by a single strip. The strip or piece 5 will also typically be adhesively secured. In fact the device shown in Figure 1 could be made by modifying a medical first-aid plaster. considering the front of the strip 1 with the masking strips 4 removed and the pad 3 activated it may be undesirable to have exposed adhesive areas to pick up dirt. Thus the strips 4 may bear the adhesive.

## Claims

1. An insect repellent device comprising a pad impregnated with a volatile insect repellent, a wearable backing for the pad such backing providing a barrier against rearward transmission of the insect repellent to the wearer impermeable and cover means for the front surface of the pad to prevent release of the volatile insect repellent until ruptured or removed.

2. A device as claimed in Claim 1 in the form of a flexible piece having an adhesive rear surface for securement to the skin or clothing of the wearer.

3. A device as claimed in either Claim 1 or Claim 2 wherein the cover means comprises one or more strips adhesively secured to the front of the backing over the pad.

4. A device as claimed in Claim 1 in the form of an adhesive patch, the rear surface of the patch being masked by removable strips.

5. A device as claimed in any of the preceding claims wherein an intermediate layer permitting vapour transmission is interposed between the pad and the cover.

6. Insect repellent devices substantially as hereinbefore described with reference to and as shown in the accompanying drawings.

FIG.1

FIG.2

FIG.3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-3896995 (J.LELICOFF)<br>* column 2, line 27 – column 4, line 29; figures 1, 6, 7, 8 * | 1-6 | A01M29/00<br>A01M1/20 |
| X | US-A-4277024 (D.SPECTOR)<br>* abstract; figures 1, 4, 5 * | 1-6 | |
| X | PATENT ABSTRACTS OF JAPAN<br>vol. 10, no. 366 (C-390)(2423) 6 December 1986,<br>& JP-A-61 161201 (JOHNSON K.K.) 21 July 1086,<br>* the whole document * | 1-6 | |
| A | US-A-4283011 (D.SPECTOR)<br>* abstract; figure 2 * | 1-6 | |

TECHNICAL FIELDS
SEARCHED (Int. Cl.5 )

A01M
A01K
A01N
A61L
A44C

The present search report has been drawn up for all claims

| Place of search | Date of completion of the search | Examiner |
|---|---|---|
| THE HAGUE | 30 OCTOBER 1989 | NEHRDICH H.J |

EPO FORM 1503 03.82 (P0401)